# FASCICULE DE BREVET EUROPEEN

(11) **EP 3 149 968 B1**
(45) Date de publication et mention de la délivrance du brevet: **15.08.2018**
(21) Numéro de dépôt: 15770906.4
(22) Date de dépôt: 29.09.2015
(51) Int. Cl.: H04R 25/00, G10L 15/26

(54) **PROCÉDÉ D'AIDE AU SUIVI D'UNE CONVERSATION POUR PERSONNE MALENTENDANTE**
VERFAHREN ZUR UNTERSTÜTZUNG DER VERFOLGUNG EINER KONVERSATION FÜR HÖRBEHINDERTE
METHOD FOR ASSISTING WITH FOLLOWING A CONVERSATION FOR A HEARING-IMPAIRED PERSON

(30) Priorité: 29.09.2014 FR 1459203
(43) Date de publication de la demande: 05.04.2017
(73) Titulaire: Guedon, Christophe, 92500 Rueil Malmaison (FR)
(72) Inventeur: Guedon, Christophe, 92500 Rueil Malmaison (FR)
(74) Mandataire: Regimbeau
(86) Numéro de dépôt international: PCT/EP2015/072333
(87) Numéro de publication internationale: WO 2016/050724

(56) Documents cités:
- US-A1- 2008 295 040
- US-A1- 2010 088 096
- US-A1- 2013 144 619
- US-A1- 2014 081 634
- Andrew Zshorn ET AL: "Transcription of multiple speakers using speaker dependent speech recognition", , 1 septembre 2003 (2003-09-01), XP055194293, Extrait de l'Internet: URL:http://hdl.handle.net/1947/4216 [extrait le 2015-06-08]
- Mike Wald ET AL: "Using Speech Recognition for Real-Time Captioning of Multiple Speakers and Synchronising Transcripts", , 1 janvier 2008 (2008-01-01), XP055194355, Extrait de l'Internet: URL:http://eprints.soton.ac.uk/266633/1/IE EEmultimedia_short_article2.doc [extrait le 2015-06-09]
- MIKE WALD ED - KLAUS MIESENBERGER ET AL: "Captioning Multiple Speakers Using Speech Recognition to Assist Disabled People", 9 juillet 2008 (2008-07-09), COMPUTERS HELPING PEOPLE WITH SPECIAL NEEDS; [LECTURE NOTES IN COMPUTER SCIENCE], SPRINGER BERLIN HEIDELBERG, BERLIN, HEIDELBERG, PAGE(S) 617 - 623, XP019092344, ISBN: 978-3-540-70539-0 le document en entier
- BAIN K ET AL: "ACCESSIBILITY, TRANSCRIPTION, AND ACCESS EVERYWHERE", IBM SYSTEMS JOURNAL, IBM CORP. ARMONK, NEW YORK, US, vol. 44, no. 3, 1 janvier 2005 (2005-01-01), pages 589-603, XP001542749, ISSN: 0018-8670
- DUCHNOWSKI P ET AL: "Toward movement-invariant automatic lip-reading and speech recognition", 1995 INTERNATIONAL CONFERENCE ON ACOUSTICS, SPEECH, AND SIGNAL PROCESSING; 9-12 MAY ,1995 ; DETROIT, MI, USA, IEEE, NEW YORK, NY, USA, vol. 1, 9 mai 1995 (1995-05-09), pages 109-112, XP010625181, DOI: 10.1109/ICASSP.1995.479285 ISBN: 978-0-7803-2431-2

## Description

### DOMAINE TECHNIQUE GENERAL

L'invention a pour objet le domaine de l'aide aux personnes malentendantes, et concerne plus précisément un procédé d'aide au suivi d'une conversation améliorant la sélection des interlocuteurs pour une personne malentendante.

### ETAT DE LA TECHNIQUE

Les personnes malentendantes sont généralement équipées de prothèses auditives réalisant une amplification des sons afin de compenser leurs difficultés d'audition.

De telles prothèses sont bien adaptées au suivi d'une conversation avec un nombre restreint d'interlocuteurs dans un environnement calme mais une personne malentendante peut continuer à avoir du mal à suivre une conversation, malgré l'utilisation de telles prothèses, dans un environnement dans lequel de nombreux bruits parasites peuvent se superposer à la conversation. Une telle situation peut se présenter lorsque la conversation a lieu dans un environnement bruyant, par exemple dans la rue ou dans une salle dans laquelle de nombreuses personnes parlent de manière simultanée, telle qu'une cantine.

Certains systèmes d'aide aux malentendants existants comme celui proposé dans la demande de brevet US2008295040 proposent de fournir à leur utilisateur une transcription textuelle des paroles des interlocuteurs, afin que l'utilisateur puisse lire leurs propos. Néanmoins, un tel système n'est efficace que lorsque le nombre d'interlocuteurs reste faible et peut devenir inexploitable lorsque l'appareil capte les voix d'interlocuteurs participant à plusieurs conversations.

Certaines prothèses disposent de micros directionnels ou d'un système de sélection permettant d'amplifier préférentiellement la voix de certains interlocuteurs participant à la conversation que l'utilisateur malentendant souhaite écouter. De tels systèmes présentent néanmoins le défaut de ne pas permettre à une personne malentendante de suivre une première conversation tout en continuant à percevoir en arrière-plan le déroulement d'une seconde conversation. De plus, dans le cas de micros directionnels, une personne malentendante utilisatrice est dans l'impossibilité de suivre les propos simultanés de personnes situées dans des directions opposées participant à la même discussion.

Il existe donc un besoin d'un procédé d'aide au suivi d'une conversation permettant à un utilisateur malentendant de suivre efficacement une première conversation entre plusieurs interlocuteurs même si ceux-ci sont disposés dans des directions opposées, sans être gêné par les bruits ambiants, tout en continuant à prendre connaissance du déroulement d'au moins une seconde conversation se déroulant en arrière-plan.

### PRESENTATION DE L'INVENTION

La présente invention se rapporte ainsi selon un premier aspect à un procédé d'aide au suivi d'une conversation selon la revendication 1 avec une pluralité d'interlocuteurs pour personne malentendante munie d'un équipement informatique, ledit équipement informatique étant relié à au moins un module d'émission de voix, au moins un dispositif d'affichage et à au moins un module de conversion de signaux voix en signaux texte,
ledit procédé comprenant les étapes suivantes :
- acquisition d'une pluralité de signaux voix et d'une pluralité de signaux texte provenant d'une pluralité d'interlocuteurs, lesdits signaux textes étant obtenus par conversion desdits signaux voix par le module de conversion de signaux ;
- sélection d'au moins un premier signal voix parmi la pluralité de signaux voix acquis ;
- sélection d'au moins un premier signal texte parmi la pluralité de signaux textes acquis, le signal voix et le signal texte sélectionnés provenant d'interlocuteur différents ;
- transmission au module d'émission de voix des premiers signaux voix sélectionnés pour émission desdits premiers signaux voix ;
- commande de l'affichage sur le dispositif d'affichage des premiers signaux texte sélectionnés.

La personne malentendante peut ainsi suivre efficacement plusieurs conversations, notamment une conversation principale sous forme audio et/ou des conversations secondaires sous forme texte.

Selon un premier mode de mise en oeuvre, au moins un desdits interlocuteurs étant équipé d'un équipement informatique d'interlocuteur comprenant au moins un microphone et ledit module de conversion de signaux voix en signaux texte, le procédé selon le premier aspect comprend les étapes suivantes mises en oeuvre par ledit au moins un équipement informatique d'interlocuteur :
- capture de signaux voix de l'interlocuteur à l'aide du microphone dudit équipement informatique d'interlocuteur,
- conversion des signaux voix capturés en signaux texte par le module de conversion dudit équipement informatique d'interlocuteur,
- transmission audit équipement informatique de la personne malentendante des signaux voix capturés et des signaux textes obtenus par conversion.

L'équipement informatique de la personne malentendante comprenant un module de réception de signaux et étant susceptible d'être connecté à un réseau de communication voix et à un réseau de communication de données, ladite étape d'acquisition de signaux d'interlocuteurs peut alors comprendre la réception des signaux voix et des signaux texte de la pluralité d'interlocuteurs par le module de réception de signaux par l'intermédiaire des réseaux de communications voix et données.

Ainsi si chaque interlocuteur dispose de son propre équipement informatique, les propos de chaque interlocuteur peuvent être capturés localement par son équipement, sous forme voix et texte, et mis à disposition des équipements des autres interlocuteurs et de la personne malentendante participant à la conversation.

Selon un deuxième mode de mise en oeuvre, l'équipement informatique de la personne malentendante comprenant au moins un microphone et ledit module de conversion de signaux voix en signaux texte, ladite étape d'acquisition de signaux d'interlocuteurs comprend les étapes suivantes :
- acquisition des signaux voix de la pluralité d'interlocuteurs à l'aide du microphone dudit équipement informatique de la personne malentendante,
- conversion des signaux voix acquis en signaux texte par ledit module de conversion.

L'équipement informatique peut ainsi être parfaitement autonome et acquérir les signaux voix et texte de l'ensemble des interlocuteurs sans que qui que ce soit d'autre que la personne malentendante n'ait besoin d'être équipé. La personne malentendante peut ainsi suivre n'importe quelle conversation dans n'importe quel environnement avec n'importe quel interlocuteur.

Selon une première variante, l'équipement informatique de la personne malentendante étant relié à une base de données de signatures vocales d'interlocuteurs connus, les sélections des premiers signaux voix et texte sont réalisées à l'aide d'une reconnaissance des signaux voix des interlocuteurs connus parmi les signaux voix acquis à partir de ladite base de données.

La reconnaissance vocale permet à l'équipement informatique de distinguer les différents interlocuteurs d'une conversation et de proposer à la personne malentendante les paroles de ces interlocuteurs sous forme de signaux voix et texte séparés pour chaque interlocuteur. Bien que les signaux de plusieurs interlocuteurs puissent être acquis en même temps par le même micro, la personne malentendante peut ainsi choisir de suivre les propos d'une partie seulement des interlocuteurs.

Selon une deuxième variante, l'étape de sélection de premiers signaux voix, respectivement de premiers signaux texte, comprend :
- une étape préalable de présélection par l'équipement informatique de la personne malentendante de signaux voix, respectivement de signaux texte, parmi la pluralité de signaux voix, respectivement de signaux texte, acquis en fonction de la distance entre l'interlocuteur émetteur dudit signal voix, respectivement signal texte, et la personne malentendante,
- une étape de sélection de premiers signaux voix, respectivement signaux texte, parmi la pluralité de signaux voix, respectivement signaux texte, présélectionnés.

La sélection des interlocuteurs peut ainsi être rendue plus simple pour la personne malentendante en présélectionnant les interlocuteurs situés dans une gamme de distance particulière, par exemple les plus proches de la personne malentendante.

Selon une troisième variante, l'équipement informatique de la personne malentendante étant relié à un dispositif de détection de mouvements de la personne malentendante, l'étape de sélection de premiers signaux voix, respectivement de premiers signaux texte, comprend :
- une étape préalable de présélection par l'équipement informatique de la personne malentendante de signaux voix, respectivement de signaux texte, parmi la pluralité de signaux voix, respectivement de signaux texte, acquis en fonction d'un mouvement de la personne malentendante détecté par le dispositif de détection de mouvements,
- une étape de sélection de premiers signaux voix, respectivement signaux texte, parmi la pluralité de signaux voix, respectivement signaux texte, présélectionnés.

La personne malentendante peut ainsi faire évoluer simplement la présélection des interlocuteurs grâce à des mouvements simples, tel que des mouvements de tête, sans avoir à saisir une commande.

Selon une quatrième variante, l'équipement informatique de la personne malentendante étant relié à au moins une caméra capturant une image des interlocuteurs dans le champ de vision de la personne malentendante et comprenant un module de reconnaissance d'image permettant d'identifier lesdits interlocuteurs dans ladite image capturée par ladite caméra, l'étape de sélection de premiers signaux voix, respectivement de premiers signaux texte, comprend :
- une étape préalable de présélection par l'équipement informatique de la personne malentendante de signaux voix, respectivement de signaux texte, d'interlocuteurs, dits interlocuteurs présélectionnés, présents dans le champ de vision de la personne malentendante parmi la pluralité de signaux voix, respectivement signaux texte, acquis,
- une étape d'identification, par le module de reconnaissance, desdits interlocuteurs présélectionnés,
- une étape d'affichage sur le dispositif d'affichage de l'image desdits interlocuteurs présélectionnés dans le champ de vision de la personne malentendante, associés à leur identification,
- une étape de sélection par la personne malentendante de premiers signaux voix, respectivement de premiers signaux texte, parmi la pluralité de signaux voix, respectivement de signaux texte, des interlocuteurs présélectionnés affichés et identifiés.

La personne malentendante peut ainsi prendre immédiatement connaissance de l'identité des interlocuteurs sélectionnables et réaliser sa sélection en fonction de son intérêt pour les propos d'un interlocuteur particulier qu'elle connait déjà.

Selon une cinquième variante, le procédé selon le premier aspect comprend :
- une étape de réception d'une commande vocale de la personne malentendante relative à un interlocuteur et à un type de signaux à sélectionner ;
- une étape de sélection de premiers signaux voix ou texte de l'interlocuteur en fonction de ladite commande vocale, l'équipement informatique de la personne malentendante comprenant un module de reconnaissance vocale configuré pour analyser ladite commande vocale.

La personne malentendante peut ainsi commander la sélection d'interlocuteurs par une simple commande vocale, sans avoir à manipuler l'équipement informatique ou une quelconque interface de saisie manuelle.

Selon une sixième variante, la sélection d'au moins un premier signal voix et/ou d'un premier signal texte est réalisée en fonction de préférences et/ou usages de la personne malentendante.

Une sélection peut ainsi être réalisée automatiquement de façon à sélectionner les interlocuteurs que la personne malentendante a le plus souvent sélectionnés dans le passé. Ceci permet de proposer automatiquement à la personne malentendante de suivre les propos des interlocuteurs présentant a priori le plus d'intérêt pour elle.

L'équipement informatique de la personne malentendante étant relié à au moins une caméra capturant une image d'au moins un interlocuteur de la personne malentendante, suite à la sélection de premiers signaux voix, respectivement de premiers signaux texte, dudit interlocuteur, ledit procédé peut comprendre en outre une étape d'affichage de l'image dudit interlocuteur situé hors du champ de vision de la personne malentendante dans une vignette insérée dans l'image affichée sur ledit dispositif d'affichage.

La personne malentendante peut ainsi avoir en permanence dans son champ de vision une image de chacun des interlocuteurs d'une conversation à laquelle elle prend part, même si ces interlocuteurs sont situés dans des directions opposées. La compréhension des propos de ces interlocuteurs est ainsi améliorée par la possibilité de prendre en compte les expressions corporelles, notamment faciales, de ces interlocuteurs.

Selon une septième variante, l'étape de sélection de premiers signaux voix, respectivement de premiers signaux texte, comprend la détermination d'un premier nombre prédéterminé, respectivement d'un deuxième nombre prédéterminé, et la sélection dudit premier nombre prédéterminé de premiers signaux voix, respectivement dudit deuxième nombre prédéterminé de premiers signaux texte, par ordre de réception.

Ceci permet à une personne malentendante de suivre une conversation entre de nombreux interlocuteurs dans laquelle l'interlocuteur ayant la parole change très fréquemment, sans que la personne malentendante ne doive corriger manuellement à chaque instant sa sélection d'interlocuteurs.

Par ailleurs, l'étape d'émission des premiers signaux voix sélectionnés peut comprendre préalablement une étape de filtrage du bruit et/ou des signaux voix non sélectionnés.

La qualité des signaux voix délivrés à la personne malentendante peut ainsi être augmentée de façon à améliorer la compréhension de la conversation.

L'équipement informatique de la personne malentendante comportant un module de reconnaissance vocal, l'étape de filtrage peut comprendre une étape de filtrage des signaux voix sélectionnés à l'aide du résultat d'une reconnaissance vocale par le module de reconnaissance vocale.

Un tel filtrage permet de traiter différemment les signaux voix d'interlocuteurs désirés et d'interlocuteurs non désirés de façon à améliorer la compréhension des propos des interlocuteurs désirés.

Selon un deuxième aspect, l'invention concerne un produit programme d'ordinateur selon la revendication 15 comprenant des instructions de code pour l'exécution d'un procédé selon le premier aspect lorsque ce programme est exécuté par un processeur.

Selon un troisième aspect, l'invention concerne un équipement informatique, selon la revendication 16, pour l'aide au suivi d'une conversation avec une pluralité d'interlocuteurs, détenu par une personne malentendante et relié à au moins un module d'émission de voix, à au moins un dispositif d'affichage et à au moins un module de conversion de signaux voix en signaux texte,
ledit équipement informatique étant configuré pour :
- acquérir une pluralité de signaux voix et une pluralité de signaux texte provenant d'une pluralité d'interlocuteurs, lesdits signaux texte étant obtenus par conversion desdits signaux voix par le module de conversion de signaux ;
- sélectionner au moins un premier signal voix parmi la pluralité de signaux voix acquis ;
- sélectionner au moins un premier signal texte parmi la pluralité de signaux texte acquis, le signal voix et le signal texte sélectionnés provenant d'interlocuteur différents ;
- transmettre au module d'émission de voix des premiers signaux voix sélectionnés pour émission desdits premiers signaux voix ;
- commander l'affichage sur le dispositif d'affichage des premiers signaux texte sélectionnés.

Selon un quatrième aspect, l'invention concerne des lunettes à réalité augmentée comprenant un équipement informatique selon le troisième aspect.

De tels produit programme d'ordinateur, équipement informatique, lunettes présentent les mêmes avantages que ceux évoqués pour le procédé selon le premier aspect.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre un exemple d'architecture pour la mise en oeuvre du procédé selon un premier mode de réalisation ;
- la figure 2 illustre un exemple d'architecture pour la mise en oeuvre du procédé selon un deuxième mode de réalisation;
- la figure 3 illustre un exemple d'architecture pour la mise en oeuvre d'une étape de filtrage selon un mode de réalisation de l'invention.

### DESCRIPTION DETAILLEE

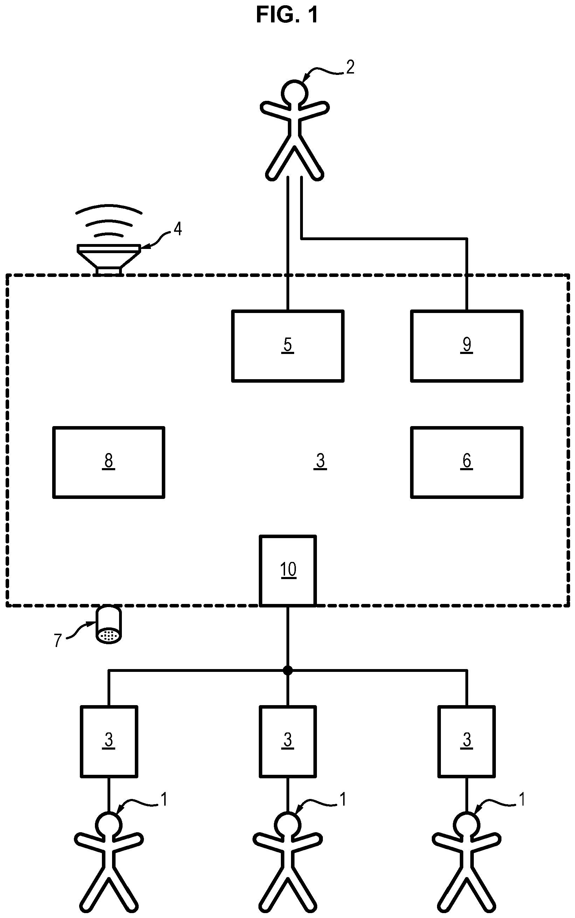

En référence à la **figure 1****,** une mise en oeuvre pour l'invention concerne un procédé d'aide au suivi d'une conversation avec une pluralité d'interlocuteurs 1 pour une personne malentendante 2 munie d'un équipement informatique 3.

Ce procédé a pour but de permettre à la personne malentendante de sélectionner parmi la pluralité d'interlocuteurs ceux dont il veut entendre la voix et ceux dont il veut lire les paroles transcrites sous forme de texte, de façon à pouvoir suivre une première conversation sous forme orale et une ou plusieurs autres conversations sous forme textuelle.

Pour cela cet équipement informatique 3 est susceptible d'être relié à au moins un module d'émission de voix 4, tel qu'un haut-parleur ou un casque audio, à au moins un dispositif d'affichage 5, à au moins un module de conversion de signaux voix en signaux texte 6, et à au moins un microphone 7. On entendra par microphone un module d'acquisition de signaux sonores, quel que soit la technologie employée pour réaliser une telle acquisition. Un tel microphone peut être directionnel pour réduire la captation des voix d'interlocuteurs non désirés ou du bruit, ou bien bidirectionnel ou omnidirectionnel afin de capturer l'ensemble d'une ambiance sonore. L'équipement informatique 3 peut également comprendre un module de traitement 8 tel qu'un microprocesseur, et une interface de saisie 9 permettant à la personne malentendante 2 d'opérer une sélection ou de saisir une commande. Selon un mode réalisation, l'interface de saisie est incluse dans le dispositif d'affichage 5 sous forme d'un écran tactile.

L'équipement informatique 3 acquiert, tout d'abord, une pluralité de signaux voix et une pluralité de signaux texte provenant de la pluralité d'interlocuteurs 1, lesdits signaux textes étant obtenus par conversion desdits signaux voix par le module de conversion de signaux 6.

Puis, la personne malentendante 2 sélectionne à l'aide de son équipement informatique 3 au moins un premier signal voix parmi la pluralité de signaux voix acquis. La personne malentendante sélectionne ainsi les interlocuteurs dont il veut entendre les propos sous forme vocale afin de suivre leur conversation.

La personne malentendante 2 sélectionne en outre à l'aide de son équipement informatique 3 au moins un premier signal texte parmi la pluralité de signaux textes acquis. La personne malentendante sélectionne ainsi les interlocuteurs dont elle veut obtenir une transcription des paroles sous forme textuelle, afin de pouvoir suivre leurs conversations en arrière-plan sans gêner sa compréhension de la conversation suivie sous forme orale.

Enfin, l'équipement informatique 3 transmet audit au moins un module d'émission de voix 4 les premiers signaux voix sélectionnés pour que ceux-ci soient émis, et commande l'affichage sur le dispositif d'affichage 5 des premiers signaux texte sélectionnés.

A la suite de l'acquisition des signaux voix et textes de la pluralité d'interlocuteurs, ceux-ci peuvent être présentés à la personne malentendante 2, par exemple par le biais de l'écran d'affichage, sous forme de liste ou d'image, pour lui permettre de faire ses sélections de premiers signaux voix et de premiers signaux textes.

Selon un premier mode de mise en oeuvre représenté en **figure 1****,** chaque interlocuteur, y compris la personne malentendante 2, dispose de son propre équipement informatique 3 dédié à la capture et la transcription de ses paroles. Chaque équipement informatique 3 comprend alors son module de conversion de signaux voix en signaux texte 6 et met en oeuvre une étape de capture de signaux voix de son utilisateur à l'aide d'au moins un microphone 7 de l'équipement informatique 3, une étape de conversion des signaux voix capturés en signaux texte par le module de conversion 6, et une étape de transmission aux autres équipements informatiques dont l'équipement informatique de la personne malentendante des signaux voix capturés et des signaux texte obtenus.

Dans ce mode de mise en oeuvre, l'équipement informatique 3 de la personne malentendante 2 comprend un module de réception de signaux 10 et est connecté à un réseau de communication voix et à un réseau de communication de données. L'étape d'acquisition de signaux d'interlocuteurs peut alors comprendre une étape de réception de signaux au cours de laquelle le module de réception de signaux 10 reçoit les signaux voix et texte de la pluralité d'interlocuteurs par l'intermédiaire respectivement du réseau de communication voix et du réseau de communication de données.

Les signaux voix de chaque interlocuteur sont ainsi capturés et transcrits en texte par son équipement informatique 3, puis les signaux voix capturés et les signaux texte correspondants sont transmis à l'équipement de la personne malentendante 2 par l'intermédiaire des réseaux voix et de données. Dans le cas où plusieurs personnes malentendantes participent à une conversation, chacune peut disposer d'un équipement réalisant à la fois d'une part la capture, la transcription et l'émission de ses propos, et d'autre part la réception des signaux provenant des autres équipements informatiques.

Les réseaux de communication voix et données peuvent consister en des réseaux filaires tels que des réseaux Ethernet, ou des réseaux sans fil tels que des réseaux Wifi, Bluetooth 3G ou 4G ou bien encore en une combinaison des deux.

La personne malentendante 2 peut se voir proposer à la sélection les signaux voix et texte acquis en fonction d'un identifiant de l'équipement ayant réalisé l'acquisition de ces signaux. Un tel identifiant peut être arbitraire ou bien correspondre à un paramètre tel qu'une adresse IP. Dans le cas d'une installation fixe, équipant par exemple une salle de réunion ou une table de repas, la personne malentendante 2 peut ainsi sélectionner les signaux voix et texte provenant d'une place particulière dans cette salle ou à cette table, indépendamment de l'identité de la personne occupant cette place.

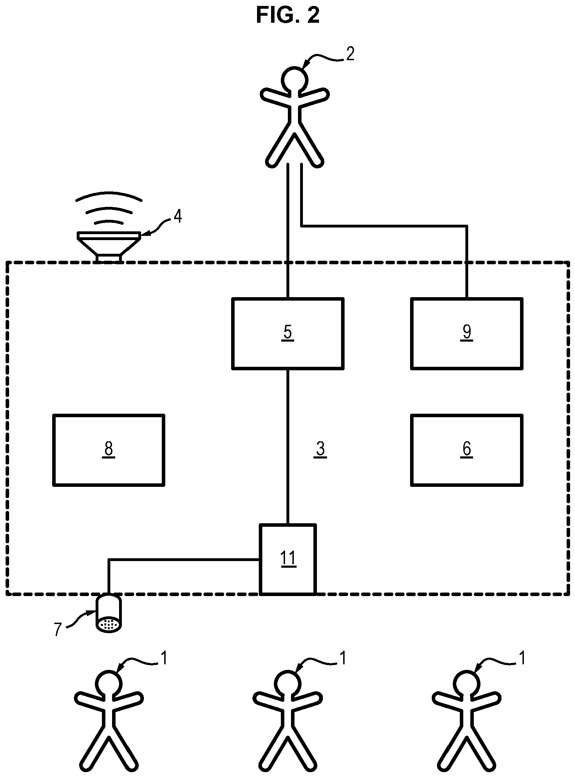

Selon un deuxième mode de mise en oeuvre représenté en **figure 2****,** l'équipement informatique 3 de la personne malentendante 2 est autonome et réalise lui-même l'acquisition et le traitement des paroles des interlocuteurs 1. L'équipement informatique 3 de la personne malentendante 2 comprend alors le module de conversion de signaux voix en signaux texte 6. L'étape d'acquisition des signaux d'interlocuteurs comprend alors une étape d'acquisition des signaux voix de la pluralité d'interlocuteurs à l'aide de l'au moins un microphone 7 de l'équipement informatique de la personne malentendante 3, et une étape de conversion des signaux voix acquis en signaux texte par ledit module de conversion 6.

Dans ce mode de mise en oeuvre, afin de distinguer les paroles des différents interlocuteurs parmi l'ensemble des sons capturés par le ou les microphones 7, l'équipement informatique 3 peut être relié à une base de données de signatures vocales d'interlocuteurs connus et l'équipement informatique de la personne malentendante 3 peut comprendre un module de reconnaissance vocale 11. Les sélections des premiers signaux voix et texte peuvent alors être réalisées à l'aide d'une reconnaissance des signaux voix des interlocuteurs connus parmi les signaux voix acquis à partir de ladite base de données, mise en oeuvre par le module de reconnaissance vocale 11. Chaque signal voix capturé par le microphone 7 à un instant donné peut être comparé aux signatures d'interlocuteurs connus stockés dans la base de données de signatures afin de présenter séparément à la personne malentendante 2 les paroles de chaque interlocuteur 1 ainsi que son identité, si celle-ci était mémorisée dans la base de données de signatures.

Il est possible de combiner les deux modes de mise en oeuvre décrits ci-dessus afin que les signaux voix de chaque interlocuteur soient à la fois capturés au niveau de l'interlocuteur et au niveau de la personne malentendante. Les signaux voix capturés auprès de chaque interlocuteur, ou les signaux textes correspondants, peuvent alors être comparés avec les signaux voix ou textes acquis au niveau de la personne malentendante et distingués les uns des autres par reconnaissance vocale. Une telle comparaison permet de déterminer si la voix d'un interlocuteur peut être entendue de manière intelligible au niveau de la personne malentendante. Une telle détermination peut être employée pour détecter une prise de parole par un interlocuteur distant à destination de toute une assemblée, par exemple dans le cadre d'une conférence ou d'une assemblée. Lorsqu'un tel interlocuteur prend la parole en parlant d'une voix forte, sa voix devient intelligible au niveau de la personne malentendante alors que cet interlocuteur ne faisait auparavant pas partie des interlocuteurs proches de la personne malentendante et que sa voix ne parvenait pas jusqu'à celle-ci. En cas de détection d'une telle prise de parole, un message peut être affiché par l'équipement informatique sur le dispositif d'affichage afin de prévenir la personne malentendante et une transcription des paroles de ce nouvel interlocuteur peut être affichée.

Quel que soit le mode de mise en oeuvre employé parmi les modes décrits ci-dessus, l'équipement informatique 3 peut consister en un dispositif portable tel qu'un téléphone intelligent (« smartphone ») ou une tablette. Alternativement, l'équipement informatique 3 peut être intégré à des lunettes sous forme de lunettes à affichage en réalité augmentée. Dans ce cas, les informations délivrées à la personne malentendante 2 peuvent être affichées sur les verres des lunettes utilisés comme dispositif d'affichage 5. La personne malentendante peut alors voir à la fois les informations affichées et son environnement en transparence. Selon une autre variante, l'équipement informatique 3 est partagé entre des lunettes utilisées pour l'affichage et portant certains capteurs, et un dispositif portable comprenant l'unité de traitement, l'interface de saisie et le reste des éléments de l'équipement informatique 3.

Selon un mode de mise en oeuvre alternatif, les signaux textes ne sont pas obtenus par conversion des signaux voix mais par reconnaissance labiale. Les signaux textes correspondant aux paroles d'un interlocuteur peuvent alors être obtenus par le module de conversion de signaux à partir d'un signal vidéo du visage de l'interlocuteur capturé par au moins une caméra vidéo reliée audit module de conversion. Une telle conversion permet de rendre la détermination des signaux textes indépendante des perturbations acoustiques pouvant affecter le signal voix correspondant.

Lorsque la quantité de signaux textes à afficher sur le dispositif d'affichage est importante, l'équipement informatique peut remplacer tout ou partie du texte à afficher par un résumé de celui-ci. Le texte peut être résumé par des phrases simples ou bien même par des mots isolés exprimant des concepts. Une telle modification du texte peut être déclenchée de manière manuelle par l'utilisateur de l'équipement informatique, pour un ou plusieurs de ses interlocuteurs, ou bien de manière automatique lorsque la quantité de texte à afficher dépasse un seuil prédéterminé. L'affichage d'un texte résumé peut permettre de diminuer la fatigue de la personne malentendante lors de conversations rapides ou avec de nombreux interlocuteurs au cours desquelles il peut être difficile de lire l'intégralité des propos sur une longue durée.

Selon un mode de mise en oeuvre, l'équipement informatique de la personne malentendante 3 peut comprendre un module de reconnaissance vocale 11. Une étape de réception d'une commande vocale de la personne malentendante 2 relative à un interlocuteur et à un type de signaux à sélectionner et une étape de sélection de premiers signaux voix ou texte de l'interlocuteur en fonction de ladite commande vocale peuvent alors être réalisées, le module de reconnaissance vocale 11 étant alors configuré pour analyser ladite commande vocale. La personne malentendante peut ainsi interagir vocalement avec l'équipement informatique 3 pour commander la sélection de signaux voix ou texte relatifs à un interlocuteur particulier. La reconnaissance par l'équipement informatique 3 d'une commande vocale émise par la personne malentendante peut n'être effective que si la personne malentendante a au préalable effectué une action particulière, comme faire un mouvement particulier ou appuyer sur un bouton d'interface, ou tant que la personne malentendante effectue une telle action.

Alternativement, la personne malentendante peut interagir avec l'équipement informatique 3 par la pensée. L'équipement informatique peut par exemple être relié à un casque neuronal posé sur le crâne de la personne malentendante et configuré pour réaliser un électroencéphalogramme de celle-ci. L'utilisateur peut ainsi soumettre à l'équipement informatique des commandes par la pensée, par exemple des commandes simples telles que la sélection d'un interlocuteur particulier. La personne malentendante peut ainsi interagit avec son équipement informatique sans utiliser ses mains et sans déranger les personnes de son entourage comme pourrait le faire une commande vocale.

Afin de faciliter la sélection des signaux voix et texte d'intérêt pour la personne malentendante 2 parmi l'ensemble des signaux voix et texte acquis, une étape de présélection peut être mise en oeuvre au cours de laquelle un ou plusieurs signaux voix ou texte d'interlocuteurs sont présélectionnés automatiquement ou en fonction d'actions de la personne malentendante. Si cette présélection lui convient, la personne malentendante peut ensuite commander simplement la sélection des signaux voix et/ou texte des interlocuteurs présélectionnés d'une simple commande, par exemple une commande vocale tel que décrit ci-dessus ou par l'intermédiaire de l'interface de saisie de l'équipement informatique 3. Dans les paragraphes ci-dessous un interlocuteur, respectivement un équipement distant, dont les signaux voix ou texte sont présélectionnés sera dénommé interlocuteur, respectivement équipement, présélectionné. La présélection d'un ou plusieurs interlocuteurs ou équipements peut être signifiée à la personne malentendante 2 par le biais du dispositif d'affichage 5. Par exemple, dans le cas d'un affichage sous forme de liste des éléments de la liste peuvent être mis en surbrillance, dans le cas d'un affichage sous forme de carte les interlocuteurs présélectionnés peuvent être représentés par une icône particulière, dans le cas d'un affichage en réalité augmentée les interlocuteurs présélectionnés peuvent être entourés d'un contour.

Des signaux voix, respectivement texte, peuvent être présélectionnés parmi la pluralité de signaux voix, respectivement de signaux texte, acquis en fonction de la distance entre l'interlocuteur émetteur dudit signal voix, respectivement signal texte, et la personne malentendante. Des premiers signaux voix, respectivement signaux texte, peuvent ensuite être sélectionnés parmi la pluralité de signaux voix, respectivement signaux texte, présélectionnés. La personne malentendante peut ainsi se voir proposer pour la sélection de signaux voix ou texte les interlocuteurs les plus proches ou bien, dans un deuxième temps par exemple, les interlocuteurs situés dans une gamme de distance prédéterminée. Afin de proposer une telle présélection en fonction de la distance, l'équipement informatique 3 doit avoir connaissance de la distance séparant chaque interlocuteur ou équipement distant de la personne malentendante. Pour cela la position de chaque interlocuteur ou équipement distant peut être déterminée par rapport à la personne malentendante par géolocalisation.

Une telle géolocalisation peut être réalisée de manière absolue à l'aide de dispositifs de géolocalisation externes tels que des récepteurs GPS. Une telle géolocalisation peut également être mise en oeuvre à l'aide d'une installation locale. Par exemple différents équipements peuvent être positionnés par triangulation par rapport aux points d'accès d'un réseau local sans fil auquel ils sont connectés, tel qu'un réseau Wifi. La géolocalisation d'un équipement peut également être réalisée de façon relative par rapport à d'autres objets dont la position absolue est connue. La position de ces objets peut par exemple être enregistrée dans une base de données de coordonnées d'objets et l'équipement à géolocaliser peut déterminer sa position par rapport à ces objets à l'aide d'un détecteur de type radar. Ces objets peuvent être des objets connectés déclinant leur identité par le biais d'un réseau sans fil. Selon une autre variante, chaque élément à géolocaliser est équipé d'un dispositif de détection de mouvement pouvant par exemple comprendre un accéléromètre trois axes et/ou un gyromètre trois axes et/ou un gyroscope. Lors d'une initialisation, la position de chaque élément à géolocaliser par rapport à un point de référence peut être enregistrée. L'évolution de la position de chaque élément par rapport à ce point de référence peut ensuite être suivie grâce à la détection des mouvements de ces éléments par leur dispositif de détection de mouvement. La géolocalisation à partir d'une base de coordonnées d'objets ou à l'aide d'un dispositif de détection de mouvement peut permettre d'obtenir une précision de localisation plus importante que celle obtenue par une localisation GPS ou Wifi. Une telle précision peut améliorer l'efficacité des traitements mis en oeuvre en fonction de cette localisation.

Une telle géolocalisation peut également être employée afin d'afficher automatiquement sur le dispositif d'affichage 5 les signaux texte correspondant aux interlocuteurs les plus proches de la personne malentendante. Un tel affichage automatique peut par exemple être mis en oeuvre tant que la personne malentendante n'a sélectionné aucun signal texte. En arrivant dans une pièce dans laquelle une conversation est en cours elle peut ainsi avoir un aperçu des paroles des interlocuteurs dans son proche entourage sans avoir à réaliser une sélection. Un tel affichage se met à jour de manière dynamique et permet ainsi à la personne malentendante de saisir les propos de personnes en mouvement ne se trouvant dans son environnement proche que pour une brève période.

Des signaux voix, respectivement texte, peuvent être présélectionnés parmi la pluralité de signaux voix, respectivement de signaux texte, acquis en fonction d'un mouvement de la personne malentendante. Des premiers signaux voix, respectivement signaux texte, peuvent ensuite être sélectionnés parmi la pluralité de signaux voix, respectivement signaux texte, présélectionnés. Pour cela, l'équipement informatique 3 de la personne malentendante peut être relié à un dispositif de détection de mouvements de la personne malentendante, tel que le dispositif de détection de mouvement décrit ci-dessus. A titre d'exemple, un tel dispositif peut détecter les mouvements de la tête ou de toute autre partie du corps de la personne malentendante.

Les deux modes de présélection décrits ci-dessus peuvent être combinés. Par exemple, les mouvements verticaux de la tête peuvent être détectés pour sélectionner une gamme de distance par rapport à la personne malentendante, en fonction de l'angle de la tête de la personne malentendante par rapport à l'horizontale. Les interlocuteurs situés dans cette gamme de distance peuvent être mis en évidence sur le dispositif d'affichage 5, par exemple en affichant un plan de la zone située dans la gamme de distance sélectionnée indiquant la position des interlocuteurs. Les mouvements horizontaux de la tête peuvent également être détectés afin de présélectionner l'interlocuteur situé le plus en face de la personne malentendante dans la gamme de distance sélectionnée. La personne malentendante peut modifier l'interlocuteur présélectionné en tournant la tête de côté ou en l'inclinant vers le haut ou le bas. L'utilisateur peut ainsi présélectionner facilement un interlocuteur, même lointain, sans avoir à saisir de commande, sans même avoir besoin de voir l'interlocuteur présélectionné.

Afin de faciliter la sélection d'interlocuteurs, l'équipement informatique 3 peut par ailleurs procéder à une identification des interlocuteurs présents à proximité de l'utilisateur. Pour cela, l'équipement informatique de la personne malentendante 3 peut être relié à au moins une caméra vidéo capturant une image des interlocuteurs dans le champ de vision de la personne malentendante 2 et peut comprendre un module de reconnaissance d'image permettant d'identifier lesdits interlocuteurs dans ladite image capturée par ladite caméra. La sélection de premiers signaux voix, respectivement de premiers signaux texte, peut alors comprendre une étape préalable de présélection par l'équipement informatique 3 de signaux voix, respectivement de signaux texte, d'interlocuteurs, dits interlocuteurs présélectionnés, présents dans le champ de vision de la personne malentendante parmi la pluralité de signaux voix, respectivement signaux texte, acquis, une étape d'identification, par le module de reconnaissance, desdits interlocuteurs présélectionnés, une étape d'affichage sur le dispositif d'affichage 5 de l'image desdits interlocuteurs présélectionnés dans le champ de vision de la personne malentendante, associés à leur identification, et une étape de sélection par la personne malentendante de premiers signaux voix, respectivement de premiers signaux texte, parmi la pluralité de signaux voix, respectivement de signaux texte, des interlocuteurs présélectionnés affichés et identifiés.

Pour cela l'équipement informatique 3 peut être relié à une base de données d'empreintes faciales stockant des portraits d'interlocuteurs connus associés à leur identité. L'équipement informatique 3 peut utiliser les images issues de sa ou ses caméras vidéo pour tenter de reconnaitre des interlocuteurs enregistrés dans la base de données d'empreintes faciales en appliquant un algorithme de reconnaissance d'image. Lorsque chaque interlocuteur de la personne malentendante 2 dispose de son propre équipement informatique 3 distant, l'équipement informatique 3 peut également utiliser les données de la base de données de signatures vocales pour tenter d'identifier l'interlocuteur utilisateur de chaque équipement distant par un algorithme de reconnaissance vocale. L'identité de chaque interlocuteur identifié peut ensuite être affichée sur le dispositif d'affichage 5 pour aider la personne malentendante à faire sa sélection.

Selon une variante une image de chaque interlocuteur présent à proximité de l'utilisateur est capturée et affichée sur le dispositif d'affichage de l'équipement informatique de l'utilisateur, que ces interlocuteurs soient présents dans le champ de vision de l'utilisateur ou non. Une pluralité de vignettes, correspondant chacune à une image du visage d'un interlocuteur, peuvent par exemple être affichées conjointement sous forme de mosaïque. Dans le cas où chaque interlocuteur est équipé de son propre équipement informatique, tel qu'un téléphone portable, de telles images peuvent par exemple être capturées par les capteurs photo embarqués par ces équipements et envoyées par ces équipements à l'équipement informatique de l'utilisateur.

L'équipement informatique de la personne malentendante 3 peut être relié à une base de données de conversation stockant des données relatives à des conversations passées suivies par la personne malentendante de manière vocale ou textuelle. Une telle base de données peut par exemple mémoriser pour ces conversations l'identité des interlocuteurs identifiés, les choix de sélection réalisés par la personne malentendante, des données de localisation de la conversation... A partir de ces données, dans une situation donnée où la personne malentendante est environnée de divers interlocuteurs, l'équipement informatique 3 peut présélectionner automatiquement les interlocuteurs les plus souvent sélectionnés dans le passé par la personne malentendante. L'équipement informatique 3 peut également déclencher automatiquement la reproduction vocale, respectivement l'affichage en mode texte, des paroles des interlocuteurs présents dont les signaux voix, respectivement texte, ont le plus souvent été sélectionnés dans le passé par la personne malentendante. Ceci permet de proposer automatiquement à la personne malentendante les interlocuteurs les plus intéressants pour elle, même si ceux-ci ne sont pas les plus proches. La sélection d'au moins un premier signal voix et/ou d'un premier signal texte est ainsi réalisée en fonction de préférences et/ou usages de la personne malentendante. La mise à jour à l'issue de chaque conversation de la base de données de conversation permet à l'équipement informatique 3 de réagir de manière personnalisée par un apprentissage basé sur une analyse du comportement de la personne malentendante.

Dans certaines situations, la personne malentendante peut être impliquée dans une conversation avec plusieurs interlocuteurs ne pouvant pas tous se trouver simultanément dans son champ de vision. C'est par exemple le cas si la personne malentendante est en conversation à table avec des interlocuteurs situés à sa droite et à sa gauche. Les personnes malentendantes compensant souvent leurs problèmes d'audition par des informations visuelles, telles que les expressions faciales, il est primordial pour une personne malentendante de pouvoir voir ses interlocuteurs. L'équipement informatique 3 peut être relié à au moins une caméra capturant une image d'un ou plusieurs interlocuteurs de la personne malentendante. Suite à la sélection de premiers signaux voix, respectivement de premiers signaux texte, de ce ou ces interlocuteurs, l'équipement informatique 3 peut afficher une image de ceux de ces locuteurs filmés par au moins une caméra et situés hors du champ de vision de la personne malentendante dans une vignette insérée dans l'image affichée sur ledit dispositif d'affichage 5. La personne malentendante peut ainsi percevoir les informations visuelles émanant de ces interlocuteurs bien qu'ils ne se trouvent pas dans son champ de vision. Afin de n'afficher que l'image du visage de ces interlocuteurs, l'équipement informatique 3 peut comprendre un système de reconnaissance d'image ou de traitement d'image isolant le visage des interlocuteurs dans les images capturées par l'au moins une caméra. Un tel affichage peut être mis à jour de manière dynamique afin de détecter les interlocuteurs intégrant ou quittant le champ de vision de la personne malentendante en fonction des mouvements de ceux-ci et de celle-ci. Les images des interlocuteurs affichées sur le dispositif d'affichage 5 peuvent être mises à jour en fonction de cette détection pour que la personne malentendante puisse en permanence visualiser une image de l'ensemble de ces interlocuteurs.

Certaines conversations peuvent faire intervenir un grand nombre de locuteurs, s'exprimant sur un temps court, à des distances variables de la personne malentendante 2. La sélection manuelle à chaque instant par la personne malentendante des interlocuteurs à suivre peut alors s'avérer fastidieuse. La sélection des interlocuteurs peut alors se faire non pas sur la base de leurs caractéristiques individuelles (identité, position, distance etc...), mais en fonction de l'ordre de réception des signaux voix et texte. L'équipement informatique 3 peut par exemple être configuré pour sélectionner automatiquement à chaque instant un nombre prédéterminé d'interlocuteurs les plus récents parmi l'ensemble des interlocuteurs. Ainsi, l'étape de sélection de premiers signaux voix, respectivement de premiers signaux texte, peut comprendre la détermination d'un premier nombre prédéterminé, respectivement d'un deuxième nombre prédéterminé, et la sélection dudit premier nombre prédéterminé de premiers signaux voix, respectivement dudit deuxième nombre prédéterminé de premiers signaux texte, par ordre de réception. Dans le cas de la sélection des signaux texte, la personne malentendante peut ainsi à chaque instant lire les propos des N derniers interlocuteurs ayant pris la parole, N étant le deuxième nombre décrit ci-dessus.

Les deux dernières fonctions décrites ci-dessus peuvent être combinées de façon à afficher sur le dispositif d'affichage 5 le visage des interlocuteurs situés en dehors du champ de vision de la personne malentendante et sélectionnés parmi les interlocuteurs ayant pris la parole récemment.

L'équipement informatique 3 peut être doté d'une fonction d'enregistrement des conversations et peut proposer à la personne malentendante une visualisation de l'historique des conversations enregistrées. La personne malentendante peut interagir avec l'équipement informatique 3 pour parcourir ces données d'historique à l'aide de boutons d'interface ou par le biais d'un écran tactile. Dans le cas d'un affichage 3D ou en réalité augmentée, les signaux voix et texte acquis peuvent être échelonnés dans l'axe de la profondeur de l'affichage en fonction de leur date d'acquisition. Dans le cas d'un nombre important d'interlocuteurs, un tel affichage, combinant un affichage selon la profondeur pour afficher l'historique des propos et un affichage à différents angles d'affichage pour différencier les interlocuteurs, assure une meilleure visibilité des conversations reproduites.

L'émission des signaux voix sélectionnés par la personne malentendante peut être précédée d'un traitement ou d'un filtrage afin de supprimer les bruits ou les signaux voix non sélectionnés par la personne malentendante.

Un tel filtrage peut être réalisé à l'aide du résultat d'une reconnaissance vocale par un module de reconnaissance vocale 11 relié à l'équipement informatique 3 ou compris dans celui-ci. La reconnaissance vocale permet de dissocier à partir d'un signal audio capturé les signaux voix correspondants à divers interlocuteurs. Les propos d'un interlocuteur désiré peuvent ainsi être extraits à partir du résultat de la reconnaissance vocale. Ces propos peuvent ensuite être employés pour synthétiser un signal voix reconstitué par synthèse vocale. Cette synthèse peut être réalisée à l'aide d'une signature vocale du locuteur préalablement enregistrée afin de reproduire un signal voix de l'interlocuteur le plus propre possible. Ce signal voix reconstitué peut être soustrait du signal audio capturé afin d'en déduire la composante du signal correspondant aux autres interlocuteurs et au bruit. Un signal voix filtré peut être reconstitué pour l'interlocuteur, par exemple en atténuant, plus ou moins fortement, dans le signal capturé la composante du signal capturé correspondant aux autres interlocuteurs et au bruit, ou bien encore en mixant cette composante avec le signal obtenu par synthèse vocale. Ceci permet de réaliser une correction fine du signal, indépendamment de l'acoustique, tout en pouvant conserver à volonté une partie de l'ambiance sonore de l'environnement.

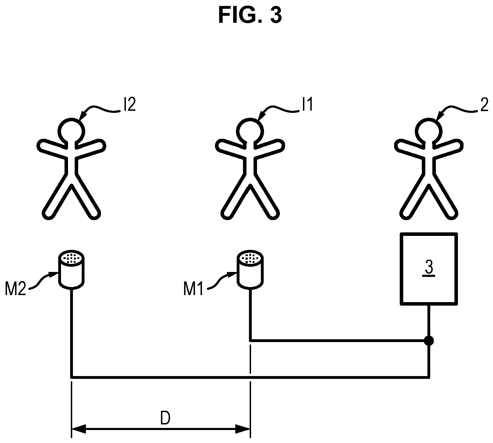

Un filtrage peut également être mis en oeuvre pour limiter dans un signal audio les contributions dues à un interlocuteur non désiré lointain. Comme représenté en **figure 3****,** l'équipement informatique 3 peut être relié à deux micros M1 et M2, respectivement proches d'un interlocuteur désiré I1 et d'un interlocuteur non désiré I2. Le signal voix correspondant à l'interlocuteur non désiré I2 capturé par le micro M1 peut être estimé par corrélation avec le signal voix correspondant à l'interlocuteur non désiré I2 capturé par le micro M2. Alternativement, connaissant la distance D séparant les micros M1 et M2, l'équipement informatique 3 peut déterminer lors d'une phase d'étalonnage la fonction de transformation reliant le signal voix de l'interlocuteur non désiré I2 acquis par le micro M1 et le signal voix de cet interlocuteur acquis par le micro M2. La distance D peut être déterminée par géolocalisation. La fonction de transformation peut être déterminée séparément pour différentes fréquences. Cette phase d'étalonnage peut être mise en oeuvre lorsque l'interlocuteur I2 est le seul à parler ou lorsque plusieurs personnes parlent en même temps mais de manière constante. Lors d'une acquisition ultérieure du signal voix du locuteur désiré I1 au niveau du micro M1, le signal acquis peut être corrigé en soustrayant la contribution des interlocuteurs non désirés tels que l'interlocuteur I2. Au signal capturé par le micro M1 à un instant t peut être soustrait le signal voix de l'interlocuteur non désiré I2 capturé à un instant (t - Δt) par le micro M2 multiplié par sa fonction de transformation, Δt correspondant au temps de propagation du son du micro M1 au micro M2. Une telle fonction de transformation permet de prendre en compte l'atténuation et le déphasage de la voix de l'interlocuteur I2 durant sa propagation entre M2 et M1, ainsi que les différences de gain entre le micro M1 et le micro M2.

Un tel filtrage peut être amélioré en associant à chaque interlocuteur un micro directionnel et un micro d'un autre type tel qu'un micro omnidirectionnel ou bidirectionnel. Le micro directionnel peut être utilisé pour déterminer les plages de fréquence couvertes par la voix de chaque interlocuteur. Les fonctions de transformation de chaque interlocuteur peuvent être définies fréquence par fréquence en fonction des plages de fréquences couvertes. La contribution d'un interlocuteur aux signaux voix des autres interlocuteurs peut ainsi être supprimée sur chaque plage de fréquence qu'il est le seul à couvrir. Ceci permet une meilleure robustesse de l'étalonnage ainsi qu'une meilleure tolérance au bruit ambiant.

La phase d'étalonnage peut être mise en oeuvre lorsque plusieurs interlocuteurs sont en train de parler en mettant en oeuvre sur les signaux capturés une étape de reconnaissance vocale telle que celle décrite ci-dessus. L'étalonnage converge ainsi au fil de l'eau, au fur et à mesure de la prise en compte des différents interlocuteurs. La fonction de transformation reliant le signal voix de l'interlocuteur non désiré I2 acquis par le micro M2 et le signal voix de cet interlocuteur acquis par le micro M1 peut alors être déterminée en comparant les signaux voix correspondant au locuteur non désiré I2 capturés par le micro M1 et par le micro M2.

Des traitements peuvent également être mis en oeuvre afin de filtrer dans les signaux audio capturés les sons indirects issus d'une ou plusieurs réflexions, par exemple sur les murs d'une salle.

Un signal audio capturé par un micro peut être analysé afin de différencier la composante du signal issue de la propagation directe du son entre l'interlocuteur et le micro et les autres composantes issues de réflexions du son. Une telle analyse peut être réalisée séparément pour différentes fréquences.

Une telle analyse peut rechercher une montée brutale d'amplitude suivie d'une période avec un signal d'amplitude constante. L'arrivée des échos successifs du signal direct produit ensuite des variations successives de l'amplitude du signal capturé, par paliers, produisant un signal dont le premier palier correspond au signal direct à isoler.

Les caractéristiques des échos générés dans un lieu peuvent être déterminées à l'avance lors d'une phase d'étalonnage, afin de soustraire ces échos d'un signal voix capturé ultérieurement. Lors d'une telle phase d'étalonnage, l'environnement sonore courant de ce lieu peut être utilisé pour une telle détermination. Alternativement, au moins un générateur de son peut être employé afin de générer des sons utilisés spécifiquement pour l'étalonnage. Les signaux utilisés pour l'étalonnage, par exemple les signaux générés par un générateur de sons, peuvent être de différents types, par exemple rectangulaires ou impulsionnels, ou encore une succession de variations transitoires et de plages de signal d'amplitude constante. Dans le cas d'un signal impulsionnel, les échos du lieu correspondent à la réponse impulsionnelle capturée en réponse à l'émission d'un signal impulsionnel.

Une autre analyse peut consister à rechercher les extremums de la dérivée d'un signal voix capturé. Ces extremums peuvent correspondre à des augmentations brutales de l'amplitude du signal, lors de l'arrivée d'un écho. Lors de la détection d'un extremum, la variation du signal peut être comparée au signal en propagation directe mesuré précédemment. L'analyse de cet écho peut également donner des renseignements sur les caractéristiques d'écho de la salle telles que le temps de retard et la fonction de transformation du signal due à l'écho.

Si un écho est bien détecté et analysé, celui-ci pourra ensuite être annulé lors d'une conversation ultérieure. Une autre analyse peut être réalisée à l'aide d'au moins deux micros directionnels distants l'un de l'autre d'une distance L et positionnés en enfilade face à un interlocuteur. Le signal capturé par le micro le plus éloigné peut être soustrait du signal capturé par le micro le plus proche de façon à minimiser les sons indirects provenant d'interlocuteurs non désirés. Une telle correction peut être réalisée séparément pour chaque fréquence. Un traitement peut être réalisé de façon à corriger la différence de phase entre les deux signaux capturés par les deux micros.

Les signaux voix correspondant à des interlocuteurs non désirés capturés par un micro d'un équipement informatique peuvent être déterminés à partir des signaux voix de ces interlocuteurs capturés par les micros des équipements informatiques de ces interlocuteurs par un calcul de simulation acoustique estimant la propagation, l'atténuation, les réflexions... de ces signaux dans une pièce. Afin de réaliser un tel calcul, l'équipement informatique peut être relié à une base de données stockant des informations concernant les caractéristiques acoustiques de cette pièce, telles que sa géométrie ou les coefficients de réflexion ou d'absorption des matériaux composant ses différents murs. De tels coefficients peuvent être fournis en fonction de la fréquence. Une telle base de données peut également comprendre des informations concernant les principaux objets ou locuteurs présents dans la pièce, telles que leur position et leur géométrie. Les signaux voix parasites générés par les paroles des utilisateurs non désirés au niveau du micro de l'équipement informatique peuvent ainsi être déterminés par calcul et soustraits du signal audio capturé par l'équipement informatique. Une telle simulation peut également exploiter des informations obtenues à partir de tests audio et/ou acoustiques pouvant être réalisés sur une salle ou des interlocuteurs dédiés. Ainsi des mesures peuvent être prises dans une salle à vide afin de déterminer les caractéristiques acoustiques de la salle. Des mesures relatives à un interlocuteur dédié peuvent être également réalisées dans une salle dédiée pour déterminer les caractéristiques sonores du signal voix de cet interlocuteur dans ladite salle dédiée telles que la réflexion du signal voix de l'interlocuteur dans cette salle, ou encore les altérations de sons dans la pièce, telles que des réflexions ou atténuations, dues à la présence de cet interlocuteur dans la pièce. Ces caractéristiques sonores seront spécifiques à l'interlocuteur puisque fonction de la géométrie de l'interlocuteur. Ces caractéristiques peuvent ensuite être ajoutées au module de calcul de simulation acoustique afin d'affiner encore le traitement du bruit.

Les sons non désirés peuvent être annulés à la source par interférence destructive en étant capturés et réémis en opposition de phase. Une telle annulation peut être mise en oeuvre pour la personne malentendante en utilisant des haut-parleurs de façon à annuler les voix des interlocuteurs non désirés au niveau du micro relié à l'équipement informatique 3 de la personne malentendante. A titre d'exemple, dans le cas d'une salle très bruyante ou avec beaucoup de réverbération, l'activation d'une telle annulation de sons pour tous les interlocuteurs permettrait de restreindre la transmission du son de n'importe quel interlocuteur vers les micros des autres interlocuteurs. Chaque micro ne capterait alors plus que la voix de l'interlocuteur portant le micro et chaque interlocuteur équipé d'un équipement informatique n'entendrait alors que les signaux voix des interlocuteurs sélectionnés.

L'équipement informatique 3 peut être relié à un premier micro captant l'intégralité de l'environnement sonore c'est-à-dire le bruit ambiant complexe (les signaux sonores des multi-locuteurs, les échos...) et le signal utile, et à un deuxième micro captant uniquement le bruit ambiant complexe. Pour que le deuxième micro ne capte que le bruit ambiant complexe sans le signal utile, un montage particulier est réalisé. Un troisième micro directionnel captant uniquement le signal voix du locuteur est relié à un module de suppression active de ce signal voix qui réémet un signal en opposition de phase à ce signal voix de sorte à ce que le signal utile c'est-à-dire le signal voix du locuteur soit annulé au niveau du deuxième micro. Le deuxième micro ne capte alors que le bruit ambiant complexe. Le signal utile du locuteur peut alors être obtenu en soustrayant du signal relatif à l'intégralité de l'environnement sonore capté par le premier micro, le signal relatif au bruit ambiant complexe capté par le deuxième micro. Les premier et deuxième micros peuvent être des micros omnidirectionnels de sorte à obtenir une meilleure qualité de prise de ce son. De tels micros sont en effet moins sensibles aux perturbations qu'un micro directionnel tout en bénéficiant de la faible sensibilité au bruit d'un micro directionnel. Un tel mode de mise en oeuvre est indépendant du type de bruit et permet ainsi le traitement de bruits complexes tout en bénéficiant d'une meilleure qualité de prise de son qu'avec un micro directionnel. En variante, le module de suppression active peut être omis et le signal voix du locuteur capté par le troisième micro directionnel peut être soustrait du signal capté par le deuxième micro afin de déterminer le bruit ambiant complexe.

Les bruits émis de manière récurrente dans l'environnement de la personne malentendante peuvent être détectés dans des enregistrements afin de les supprimer. Pour cela, les sons non reconnus par reconnaissance vocale par l'équipement informatique 3 peuvent être analysés afin de déterminer si des sons proches ont été émis de manière répétée. Un calcul d'autocorrélation du signal peut être réalisé pour déterminer une telle émission répétée de sons proches. Si c'est le cas, le signal enregistré peut être filtré afin de les faire disparaitre, par exemple en filtrant les fréquences auxquelles ce son est émis.

Des bruits caractéristiques, par exemple d'une salle, peuvent également être enregistrés dans une base de données de bruits. Un son d'un signal capturé non reconnu par reconnaissance vocale mais identifié comme un bruit dans la base de données de bruit peut être filtré afin de corriger le signal capturé.

Un traitement peut également être mis en oeuvre afin de filtrer les résonnances survenant lorsqu'un son est émis à une fréquence de résonnance d'une salle. Les fréquences de résonnance des salles fréquentées par la personne malentendante peuvent être enregistrées dans une base de données de résonance. Lorsque l'équipement informatique 3 détecte par géolocalisation que la personne malentendante se trouve dans une pièce dans laquelle les fréquences de résonnance sont renseignées dans la base de données de résonnance, ces fréquences peuvent être filtrées afin de supprimer les résonnances des signaux voix acquis.

Lorsque des équipements présents à proximité de la personne malentendante peuvent émettre des bruits gênants, des micros peuvent être positionnés auprès de ces équipements de façon à détecter l'émission de tels bruits. Lorsqu'un tel bruit est détecté, les fréquences sur lesquelles ce bruit est émis peuvent être filtrées par l'équipement informatique 3 de façon à supprimer ce bruit des signaux voix acquis. Un tel système dédié permet de traiter les bruits émis par un équipement connu de manière irrégulière. Selon une variante, de tels équipements peuvent être équipés de haut-parleurs destinés à émettre un son en opposition de phase à ces bruits, en permanence ou au moment de la détection de l'émission d'un tel bruit.

Les sons réémis par les haut-parleurs reliés à l'équipement informatique 3 peuvent être émis de manière à recréer pour la personne malentendante une impression de spatialisation. Pour cela, l'amplitude des sons réémis à destination de l'oreille gauche de la personne malentendante peut être différente de l'amplitude des sons réémis à destination de l'oreille droite. La différence d'amplitude peut être déterminée en fonction de l'angle entre la direction située en face de la personne malentendante et la droite allant de la personne malentendante vers le micro ayant capturé les sons réémis. Les sons capturés par des micros situés à gauche de la personne malentendante peuvent ainsi être réémis avec une plus forte amplitude à destination de l'oreille gauche que de l'oreille droite de façon à donner à la personne malentendante l'impression que le son réémis provient de l'emplacement du micro ayant capturé le son. Une telle spatialisation peut être mise en oeuvre indépendamment pour différentes fréquences. Une telle spatialisation peut être adaptée de manière dynamique de façon à suivre les mouvements de la tête de la personne malentendante.

De la même manière, la phase des signaux réémis peut être modulée de façon à reproduire les différences de phase entre les signaux parvenant aux deux oreilles de la personne malentendante. Pour cela, au moins deux micros peuvent être placés en enfilade par rapport à un interlocuteur de façon à déterminer la différence de phase correspondant à la différence de parcours d'un son entre l'oreille droite et l'oreille gauche de la personne malentendante.

Dans le cas de l'utilisation d'un casque pour reproduire les sons, celui-ci peut être équipé d'un système de suppression active de bruit par opposition de phase afin de réduire l'amplitude des bruits passant au travers du casque.

La personne malentendante peut ainsi suivre efficacement une première conversation entre plusieurs interlocuteurs même si ceux-ci sont disposés dans des directions opposées, sans être gêné par les bruits ambiants, tout en continuant à prendre connaissance du déroulement d'au moins une seconde conversation se déroulant en arrière-plan.

## Revendications

1. Procédé d'aide au suivi d'une conversation avec une pluralité d'interlocuteurs (1) pour personne malentendante (2) munie d'un équipement informatique (3),
ledit équipement informatique étant relié à au moins un module d'émission de voix (4), au moins un dispositif d'affichage (5) et à au moins un module de conversion (6) de signaux voix en signaux texte, ledit procédé comprenant les étapes suivantes :
- acquisition d'une pluralité de signaux voix et d'une pluralité de signaux texte provenant d'une pluralité d'interlocuteurs, lesdits signaux textes étant obtenus par conversion desdits signaux voix par le module de conversion (6) de signaux ;
- sélection d'au moins un premier signal voix parmi la pluralité de signaux voix acquis ;
- sélection d'au moins un premier signal texte parmi la pluralité de signaux textes acquis, le signal voix et le signal texte sélectionnés provenant d'interlocuteurs différents ;
- transmission au module d'émission de voix (4) des premiers signaux voix sélectionnés pour émission desdits premiers signaux voix ;
- commande de l'affichage sur le dispositif d'affichage (5) des premiers signaux texte sélectionnés.

2. Procédé selon la revendication précédente, au moins un desdits interlocuteurs étant équipé d'un équipement informatique d'interlocuteur (3) comprenant au moins un microphone (7) et ledit module de conversion (6) de signaux voix en signaux texte, comprenant les étapes suivantes mises en oeuvre par ledit au moins un équipement informatique d'interlocuteur :
- capture de signaux voix de l'interlocuteur à l'aide du microphone (7) dudit équipement informatique d'interlocuteur,
- conversion des signaux voix capturés en signaux texte par le module de conversion dudit équipement informatique d'interlocuteur (6),
- transmission audit équipement informatique de la personne malentendante des signaux voix capturés et des signaux textes obtenus par conversion.

3. Procédé selon la revendication précédente, dans lequel l'équipement informatique de la personne malentendante (3) comprenant un module de réception de signaux (10) et étant susceptible d'être connecté à un réseau de communication voix et à un réseau de communication de données, ladite étape d'acquisition de signaux d'interlocuteurs comprend la réception des signaux voix et des signaux texte de la pluralité d'interlocuteurs par le module de réception de signaux (10) par l'intermédiaire des réseaux de communications voix et données.

4. Procédé selon la revendication 1, dans lequel l'équipement informatique de la personne malentendante (3) comprenant au moins un microphone (7) et ledit module de conversion (6) de signaux voix en signaux texte, ladite étape d'acquisition de signaux d'interlocuteurs comprend les étapes suivantes :
- acquisition des signaux voix de la pluralité d'interlocuteurs à l'aide du microphone (7) dudit équipement informatique de la personne malentendante,
- conversion des signaux voix acquis en signaux texte par ledit module de conversion (6).

5. Procédé selon l'une des revendications précédentes, dans lequel l'équipement informatique de la personne malentendante (3) étant relié à une base de données de signatures vocales d'interlocuteurs connus, les sélections des premiers signaux voix et texte sont réalisées à l'aide d'une reconnaissance des signaux voix des interlocuteurs connus parmi les signaux voix acquis à partir de ladite base de données.

6. Procédé selon l'une des revendications précédentes, dans lequel l'étape de sélection de premiers signaux voix, respectivement de premiers signaux texte, comprend :
- une étape préalable de présélection par l'équipement informatique de la personne malentendante de signaux voix, respectivement de signaux texte, parmi la pluralité de signaux voix, respectivement de signaux texte, acquis en fonction de la distance entre l'interlocuteur émetteur dudit signal voix, respectivement signal texte, et la personne malentendante,
- une étape de sélection de premiers signaux voix, respectivement signaux texte, parmi la pluralité de signaux voix, respectivement signaux texte, présélectionnés.

7. Procédé selon l'une des revendications précédentes, dans lequel l'équipement informatique (3) de la personne malentendante étant relié à un dispositif de détection de mouvements de la personne malentendante (2), l'étape de sélection de premiers signaux voix, respectivement de premiers signaux texte, comprend :
- une étape préalable de présélection par l'équipement informatique (3) de la personne malentendante de signaux voix, respectivement de signaux texte, parmi la pluralité de signaux voix, respectivement de signaux texte, acquis en fonction d'un mouvement de la personne malentendante détecté par le dispositif de détection de mouvements,
- une étape de sélection de premiers signaux voix, respectivement signaux texte, parmi la pluralité de signaux voix, respectivement signaux texte, présélectionnés.

8. Procédé selon l'une des revendications précédentes, dans lequel, l'équipement informatique (3) de la personne malentendante étant relié à au moins une caméra capturant une image des interlocuteurs dans le champ de vision de la personne malentendante (2) et comprenant un module de reconnaissance d'image permettant d'identifier lesdits interlocuteurs dans ladite image capturée par ladite caméra, l'étape de sélection de premiers signaux voix, respectivement de premiers signaux texte, comprend :
- une étape préalable de présélection par l'équipement informatique (3) de la personne malentendante de signaux voix, respectivement de signaux texte, d'interlocuteurs, dits interlocuteurs présélectionnés, présents dans le champ de vision de la personne malentendante parmi la pluralité de signaux voix, respectivement signaux texte, acquis,
- une étape d'identification, par le module de reconnaissance, desdits interlocuteurs présélectionnés,
- une étape d'affichage sur le dispositif d'affichage (5) de l'image desdits interlocuteurs présélectionnés dans le champ de vision de la personne malentendante, associés à leur identification,
- une étape de sélection par la personne malentendante de premiers signaux voix, respectivement de premiers signaux texte, parmi la pluralité de signaux voix, respectivement de signaux texte, des interlocuteurs présélectionnés affichés et identifiés.

9. Procédé selon l'une des revendications précédentes comprenant :
- une étape de réception d'une commande vocale de la personne malentendante (2) relative à un interlocuteur et à un type de signaux à sélectionner ;
- une étape de sélection de premiers signaux voix ou texte de l'interlocuteur en fonction de ladite commande vocale, l'équipement informatique de la personne malentendante (3) comprenant un module de reconnaissance vocale (11) configuré pour analyser ladite commande vocale.

10. Procédé selon l'une des revendications précédentes dans lequel la sélection d'au moins un premier signal voix et/ou d'un premier signal texte est réalisée en fonction de préférences et/ou usages de la personne malentendante (2).

11. Procédé selon l'une des revendications précédentes, dans lequel l'équipement informatique (3) de la personne malentendante étant relié à au moins une caméra capturant une image d'au moins un interlocuteur (1) de la personne malentendante (2),
suite à la sélection de premiers signaux voix, respectivement de premiers signaux texte, dudit interlocuteur, ledit procédé comprend une étape d'affichage de l'image dudit interlocuteur situé hors du champ de vision de la personne malentendante (2) dans une vignette insérée dans l'image affichée sur ledit dispositif d'affichage (5).

12. Procédé selon l'une des revendications précédentes, dans lequel l'étape de sélection de premiers signaux voix, respectivement de premiers signaux texte, comprend la détermination d'un premier nombre prédéterminé, respectivement d'un deuxième nombre prédéterminé, et la sélection dudit premier nombre prédéterminé de premiers signaux voix, respectivement dudit deuxième nombre prédéterminé de premiers signaux texte, par ordre de réception.

13. Procédé selon l'une des revendications précédentes, dans lequel l'étape d'émission des premiers signaux voix sélectionnés comprend préalablement une étape de filtrage du bruit et/ou des signaux voix non sélectionnés.

14. Procédé selon la revendication précédente dans lequel, l'équipement informatique (3) de la personne malentendante comportant un module de reconnaissance vocal, l'étape de filtrage comprend une étape de filtrage des signaux voix sélectionnés à l'aide du résultat d'une reconnaissance vocale par le module de reconnaissance vocale (11).

15. Produit programme d'ordinateur comprenant des instructions de code pour l'exécution d'un procédé selon l'une quelconque des revendications précédentes lorsque ce programme est exécuté par un processeur.

16. Equipement informatique (3), pour l'aide au suivi d'une conversation avec une pluralité d'interlocuteurs (1), détenu par une personne malentendante (2) et relié à au moins un module d'émission de voix (4), à au moins un dispositif d'affichage (5) et à au moins un module de conversion de signaux voix en signaux texte (6),
ledit équipement informatique (3) étant configuré pour :
- acquérir une pluralité de signaux voix et une pluralité de signaux texte provenant d'une pluralité d'interlocuteurs, lesdits signaux texte étant obtenus par conversion desdits signaux voix par le module de conversion de signaux (6) ;
- sélectionner au moins un premier signal voix parmi la pluralité de signaux voix acquis ;
- sélectionner au moins un premier signal texte parmi la pluralité de signaux texte acquis, le signal voix et le signal texte sélectionnés provenant d'interlocuteurs différents ;
- transmettre au module d'émission de voix (4) des premiers signaux voix sélectionnés pour émission desdits premiers signaux voix ;
- commander l'affichage sur le dispositif d'affichage (5) des premiers signaux texte sélectionnés.

17. Lunettes à réalité augmentée comprenant un équipement informatique (3) selon la revendication 16.

## Patentansprüche

1. Verfahren zur Unterstützung bei der Verfolgung eines Gesprächs mit einer Vielzahl von Gesprächspartnern (1) für eine hörbehinderte Person (2), die mit einer IT-Ausrüstung (3) ausgestattet ist,
wobei die IT-Ausrüstung an mindestens ein Sprachausgabemodul (4), mindestens eine Anzeigevorrichtung (5) und an mindestens ein Modul zur Umwandlung (6) von Sprachsignalen in Textsignale angeschlossen ist,
wobei das Verfahren die folgenden Schritte umfasst:
- Erfassen einer Vielzahl von Sprachsignalen und einer Vielzahl von Textsignalen, welche von einer Vielzahl von Gesprächspartnern stammen, wobei die Textsignale durch Umwandeln der Sprachsignale über das Signalumwandlungsmodul (6) erhalten werden;
- Auswählen von mindestens einem ersten Sprachsignal aus der Vielzahl von erfassten Sprachsignalen;
- Auswählen von mindestens einem ersten Textsignal aus der Vielzahl von erfassten Textsignalen, wobei das Sprachsignal und das Textsignal, die ausgewählt werden, von verschiedenen Gesprächspartnern stammen;
- Übertragen der ersten ausgewählten Sprachsignale zur Ausgabe der ersten Sprachsignale an das Sprachausgabemodul (4);
- Steuern der Anzeige der ausgewählten ersten Textsignale auf der Anzeigevorrichtung (5).

2. Verfahren nach dem vorstehenden Anspruch, wobei mindestens einer der Gesprächspartner mit einer IT-Ausrüstung für Gesprächspartner (3) ausgerüstet ist, die mindestens ein Mikrofon (7) und das Modul zur Umwandlung (6) von Sprachsignalen in Textsignale umfasst, umfassend die folgenden Schritte, die von der mindestens einen IT-Ausrüstung für Gesprächspartner umgesetzt werden:
- Aufnehmen von Sprachsignalen des Gesprächspartners mithilfe des Mikrofons (7) der IT-Ausrüstung für Gesprächspartner,
- Umwandeln der aufgenommenen Sprachsignale in Textsignale durch das Umwandlungsmodul der IT-Ausrüstung für Gesprächspartner (6),
- Übertragen der aufgenommenen Sprachsignale und der durch Umwandlung erhaltenen Textsignale an die IT-Ausrüstung der hörbehinderten Person.

3. Verfahren nach dem vorstehenden Anspruch, wobei die IT-Ausrüstung der hörbehinderten Person (3) ein Signalempfangsmodul (10) umfasst und geeignet ist, mit einem Sprachkommunikationsnetz und mit einem Datenkommunikationsnetz verbunden zu werden, wobei der Schritt des Erfassens von Signalen von Gesprächspartnern das Empfangen der Sprachsignale und der Textsignale der Vielzahl von Gesprächspartnern durch das Signalempfangsmodul (10) mittels der Sprach-und Datenkommunikationsnetze umfasst.

4. Verfahren nach Anspruch 1, wobei die IT-Ausrüstung der hörbehinderten Person (3) mindestens ein Mikrofon (7) und das Modul zur Umwandlung (6) von Sprachsignalen in Textsignale umfasst, wobei der Schritt des Erfassens von Signalen von Gesprächspartnern die folgenden Schritte umfasst:
- Erfassen der Sprachsignale der Vielzahl von Gesprächspartnern mithilfe des Mikrofons (7) der IT-Ausrüstung der hörbehinderten Person,
- Umwandeln der erfassten Sprachsignale in Textsignale durch das Umwandlungsmodul (6).

5. Verfahren nach einem der vorstehenden Ansprüche, wobei die IT-Ausrüstung der hörbehinderten Person (3) an eine Datenbank von Sprachsignaturen bekannter Gesprächspartner angeschlossen ist, wobei die Auswahlen der ersten Sprach- und Textsignale mithilfe einer Erkennung der Sprachsignale der bekannten Gesprächspartner aus den erfassten Sprachsignalen anhand der Datenbank ausgeführt werden.

6. Verfahren nach einem der vorstehenden Ansprüche, wobei der Schritt des Auswählens von ersten Sprachsignalen beziehungsweise von ersten Textsignalen umfasst:
- einen vorhergehenden Schritt des Vorauswählens, durch die IT-Ausrüstung der hörbehinderten Person, von Sprachsignalen beziehungsweise von Textsignalen aus der Vielzahl von erfassten Sprachsignalen beziehungsweise Textsignalen in Abhängigkeit von der Entfernung zwischen dem Gesprächspartner, welcher das Sprachsignal beziehungsweise Textsignal ausgibt, und der hörbehinderten Person,
- einen Schritt des Auswählens von ersten Sprachsignalen beziehungsweise Textsignalen aus der Vielzahl von vorausgewählten Sprachsignalen beziehungsweise Textsignalen.

7. Verfahren nach einem der vorstehenden Ansprüche, wobei die IT-Ausrüstung (3) der hörbehinderten Person an eine Vorrichtung zur Detektion von Bewegungen der hörbehinderten Person (2) angeschlossen ist, wobei der Schritt des Auswählens von ersten Sprachsignalen beziehungsweise von ersten Textsignalen umfasst:
- einen vorhergehenden Schritt des Vorauswählens, durch die IT-Ausrüstung (3) der hörbehinderten Person, von Sprachsignalen beziehungsweise von Textsignalen aus der Vielzahl von erfassten Sprachsignalen beziehungsweise Textsignalen in Abhängigkeit von einer Bewegung der hörbehinderten Person, die von der Bewegungsdetektionsvorrichtung detektiert wird,
- einen Schritt des Auswählens von ersten Sprachsignalen beziehungsweise Textsignalen aus der Vielzahl von vorausgewählten Sprachsignalen beziehungsweise Textsignalen.

8. Verfahren nach einem der vorstehenden Ansprüche, wobei die IT-Ausrüstung (3) der hörbehinderten Person an mindestens eine Kamera angeschlossen ist, welche ein Bild der Gesprächspartner im Blickfeld der hörbehinderten Person (2) aufnimmt und ein Bilderkennungsmodul umfasst, welches es ermöglicht, die Gesprächspartner in dem von der Kamera aufgenommenen Bild zu identifizieren, wobei der Schritt des Auswählens von ersten Sprachsignalen beziehungsweise von ersten Textsignalen umfasst:
- einen vorhergehenden Schritt des Vorauswählens, durch die IT-Ausrüstung (3) der hörbehinderten Person, von Sprachsignalen beziehungsweise von Textsignalen von als vorausgewählte Gesprächspartner bezeichneten Gesprächspartnern, welche sich im Blickfeld der hörbehinderten Person aufhalten, aus der Vielzahl von erfassten Sprachsignalen beziehungsweise Textsignalen,
- einen Schritt des Identifizierens, durch das Erkennungsmodul, der vorausgewählten Gesprächspartner,
- einen Schritt des Anzeigens, auf der Anzeigevorrichtung (5), des Bildes der vorausgewählten Gesprächspartner im Blickfeld der hörbehinderten Person, mit ihrer Identifikation verknüpft,
- einen Schritt des Auswählens, durch die hörbehinderte Person, von ersten Sprachsignalen beziehungsweise von ersten Textsignalen aus der Vielzahl von Sprachsignalen beziehungsweise von Textsignalen der angezeigten und identifizierten vorausgewählten Gesprächspartner.

9. Verfahren nach einem der vorstehenden Ansprüche, umfassend:
- einen Schritt des Empfangens eines Sprachbefehls der hörbehinderten Person (2), der sich auf einen Gesprächspartner und auf eine Art von Signalen bezieht, welche ausgewählt werden sollen;
- einen Schritt des Auswählens von ersten Sprach-oder Textsignalen des Gesprächspartners in Abhängigkeit vom Sprachbefehl, wobei die IT-Ausrüstung der hörbehinderten Person (3) ein Spracherkennungsmodul (11) umfasst, das dafür ausgebildet ist, den Sprachbefehl zu analysieren.

10. Verfahren nach einem der vorstehenden Ansprüche, wobei das Auswählen von mindestens einem ersten Sprachsignal und/oder von einem ersten Textsignal in Abhängigkeit von Präferenzen und/oder Gepflogenheiten der hörbehinderten Person (2) ausgeführt wird.

11. Verfahren nach einem der vorstehenden Ansprüche, wobei die IT-Ausrüstung (3) der hörbehinderten Person an mindestens eine Kamera angeschlossen ist, die ein Bild von mindestens einem Gesprächspartner (1) der hörbehinderten Person (2) aufnimmt,
nach dem Auswählen von ersten Sprachsignalen beziehungsweise von ersten Textsignalen des Gesprächspartners das Verfahren einen Schritt des Anzeigens des Bildes des Gesprächspartners, welcher sich außerhalb des Blickfeldes der hörbehinderten Person (2) befindet, in einem Miniaturbild umfasst, welches in das auf der Anzeigevorrichtung (5) angezeigte Bild eingefügt wird.

12. Verfahren nach einem der vorstehenden Ansprüche, wobei der Schritt des Auswählens von ersten Sprachsignalen beziehungsweise von ersten Textsignalen das Bestimmen einer ersten vorbestimmten Anzahl beziehungsweise einer zweiten vorbestimmten Anzahl, und das Auswählen der ersten vorbestimmten Anzahl von ersten Sprachsignalen, beziehungsweise der zweiten vorbestimmten Anzahl von ersten Textsignalen in Empfangsreihenfolge umfasst.

13. Verfahren nach einem der vorstehenden Ansprüche, wobei der Schritt des Ausgebens der ausgewählten ersten Sprachsignale vorhergehend einen Schritt des Filterns des Rauschens und/oder der nicht ausgewählten Sprachsignale umfasst.

14. Verfahren nach dem vorstehenden Anspruch, wobei, wenn die IT-Ausrüstung (3) der hörbehinderten Person ein Spracherkennungsmodul umfasst, der Schritt des Filterns einen Schritt des Filterns der ausgewählten Sprachsignale mithilfe des Ergebnisses einer Spracherkennung durch das Spracherkennungsmodul (11) umfasst.

15. Computerprogrammprodukt, welches Codeanweisungen zum Ausführen eines Verfahrens nach einem der vorstehenden Ansprüche umfasst, wenn dieses Programm von einem Prozessor ausgeführt wird.

16. IT-Ausrüstung (3) zur Unterstützung bei der Verfolgung eines Gesprächs mit einer Vielzahl von Gesprächspartnern (1), welche sich im Besitz einer hörbehinderten Person (2) befindet und an mindestens ein Sprachausgabemodul (4), an mindestens eine Anzeigevorrichtung (5) und an mindestens ein Modul zur Umwandlung von Sprachsignalen in Textsignale (6) angeschlossen ist,
wobei die IT-Ausrüstung (3) dafür ausgebildet ist:
- eine Vielzahl von Sprachsignalen und eine Vielzahl von Textsignalen zu erfassen, welche von einer Vielzahl von Gesprächspartnern stammen, wobei die Textsignale durch Umwandeln der Sprachsignale über das Signalumwandlungsmodul (6) erhalten werden;
- mindestens ein erstes Sprachsignal aus der Vielzahl von erfassten Sprachsignalen auszuwählen;
- mindestens ein erstes Textsignal aus der Vielzahl von erfassten Textsignalen auszuwählen, wobei das Sprachsignal und das Textsignal, die ausgewählt werden, von verschiedenen Gesprächspartnern stammen;
- erste ausgewählte Sprachsignale zur Ausgabe der ersten Sprachsignale an das Sprachausgabemodul (4) zu übertragen;
- die Anzeige der ausgewählten ersten Textsignale auf der Anzeigevorrichtung (5) zu steuern.

17. Augmented-Reality-Brille, die eine IT-Ausrüstung (3) nach Anspruch 16 umfasst.

## Claims

1. Method for assisting with following a conversation with a plurality of speakers (1) for a hearing-impaired person (2) provided with a computer system (3),
said computer system being connected to at least one voice-emitting module (4), at least one display device (5) and to at least one module (6) for converting voice signals into text signals,
said method comprising the following steps:
- acquiring a plurality of voice signals and a plurality of text signals from a plurality of speakers, said text signals being obtained by conversion of said voice signals by the module for converting (6) signals;
- selecting at least one first voice signal among the plurality of acquired voice signals;
- selecting at least one first text signal among the plurality of acquired text signals, the selected voice signal and the text signal from different speakers;
- transmitting the first selected voice signals to the voice-emitting module (4) in order to emit said first voice signals;
- controlling the display device (5) to display the first selected text signals.

2. Method as claimed in the preceding claim, at least one of said speakers being provided with a computer system of a speaker (3) comprising at least one microphone (7) and said module (6) for converting voice signals into text signals, comprising the following steps implemented by said at least one computer system of a speaker:
- capturing voice signals of the speaker using a microphone (7) of said computer system of a speaker,
- converting of the captured voice signals into text signals by the conversion module of said computer system of a speaker (6),
- transmitting to said computer system of the hearing-impaired person of the captured voice signals and of the text signals obtained through conversion.

3. Method as claimed in the preceding claim, wherein the computer system of the hearing-impaired person (3) comprising a module for receiving signals (10) and being able to be connected to a voice communication network and to a data communication network, said step of acquiring signals from speakers comprises the receiving of voice signals and of text signals of the plurality of speakers by the signal receiving module (10) by the intermediary of the voice and data communication networks.

4. Method according to claim 1, wherein the computer system of the hearing-impaired person (3) comprising at least one microphone (7) and said module (6) for converting voice signals into text signals, said step of acquiring signals from speakers comprises the following steps:
- acquiring voice signals from the plurality of speakers using a microphone (7) of said computer system of the hearing-impaired person,
- converting of the acquired voice signals into text signals by said conversion module (6).

5. Method according to one of the preceding claims, wherein the computer system of the hearing-impaired person (3) being connected to a database of voice signatures of known speakers, the selections of the first voice and text signals are made using a recognition of the voice signals of the known speakers among the acquired voice signals using said database.

6. Method according to one of the preceding claims, wherein the step of selecting first voice signals, respectively first text signals, comprises:
- a prior step of preselecting by the computer system of the hearing-impaired person voice signals, respectively text signals, among the plurality of voice signals, respectively text signals, according to the function of the distance between the speaker emitting said voice signal, respectively text signal, and the hearing-impaired person,
- a step of selecting first voice signals, respectively text signals, among the plurality of voice signals, respectively text signals, preselected.

7. Method according to one of the preceding claims, wherein the computer system (3) of the hearing-impaired person being connected to a device for detecting movements of the hearing-impaired person (2), the step of selecting first voice signals, respectively first text signals, comprises:
- a prior step of preselecting by the computer system (3) of the hearing-impaired person voice signals, respectively text signals, among the plurality of voice signals, respectively text signals, acquired as a function of a movement of the hearing-impaired person detected by the device for detecting movements,
- a step of selecting first voice signals, respectively text signals, among the plurality of voice signals, respectively text signals, preselected.

8. Method according to one of the preceding claims, wherein, the computer system (3) of the hearing-impaired person being connected to at least one camera capturing an image of the speakers in the field of vision of the hearing-impaired person (2) and comprising an image recognition module that makes it possible to identify said speakers in said image captured by said camera, the step of selecting first voice signals, respectively first text signals, comprises:
- a prior step of preselecting by the computer system (3) of the hearing-impaired person voice signals, respectively text signals, of speakers, referred to as preselected speakers, present in the field of vision of the hearing-impaired person among the plurality of voice signals, respectively text signals, acquired,
- a step of identifying, by the recognition module, of said preselected speakers,
- a step of displaying on the display device (5) of the image of said preselected speakers in the field of vision of the hearing-impaired person, associated with their identification,
- a step of selecting by the hearing-impaired person of first voice signals, respectively first text signals, among the plurality of voice signals, respectively text signals, of preselected displayed and identified speakers.

9. Method according to one of the preceding claims comprising:
- a step of receiving a voice command of the hearing-impaired person (2) relative to a speaker and to a type of signals to be selected;
- a step of selecting first voice or text signals of the speaker according to said voice command, the computer system of the hearing-impaired person (3) comprising a voice recognition module (11) configured to analyse said voice command.

10. Method according to one of the preceding claims wherein the selecting at least one first voice signal and/or one first text signal is carried out according to the preference and/or habits of the hearing-impaired person (2).

11. Method according to one of the preceding claims, wherein the computer system (3) of the hearing-impaired person being connected to at least one camera capturing an image of at least one speaker (1) of the hearing-impaired person (2),
following a selection of first voice signals, respectively first text signals, of said speaker, said method comprises a step of displaying the image of said speaker located outside the field of vision of the hearing-impaired person (2) in a thumbnail inserted into the image displayed on said display device (5).

12. Method according to one of the preceding claims, wherein the step of selecting first voice signals, respectively first text signals, comprises the determining of a first predetermined number, respectively of second predetermined number, and the selecting of said first predetermined number of first voice signals, respectively of said second predetermined number of first text signals, by order of reception.

13. Method according to one of the preceding claims, wherein the step of emitting first selected voice signals comprises beforehand a step of filtering noise and/or unselected voice signals.

14. Method as claimed in the preceding claim wherein, the computer system (3) of the hearing-impaired person comprising a voice recognition module, the step of filtering comprises a step of filtering selected voice signals using the result of a voice recognition by the voice recognition module (11).

15. Computer program product comprising code instructions for executing a method as claimed in any preceding claim when this program is executed by the processor.

16. Computer system (3), for assisting with following a conversation with a plurality of speakers (1), held by a hearing-impaired person (2) and connected to at least one voice-emitting module (4), to at least one display device (5) and to at least one module for converting voice signals into text signals (6),
said computer system (3) being configured to:
- acquiring a plurality of voice signals and a plurality of text signals from a plurality of speakers, said text signals being obtained by conversion of said voice signals by the signal conversion module (6);
- selecting at least one first voice signal among the plurality of acquired voice signals;
- selecting at least one first text signal along the plurality of acquired text signal, the selected voice signal and the text signal from different speakers;
- transmitting to the voice-emitting module (4) first selected voice signals for emission of said first voice signals;
- controlling the display on the display device (5) of the first selected text signals.

17. Augmented reality glasses comprising a computer system (3) according to claim 16.
